# EUROPÄISCHE PATENTSCHRIFT

(11) **EP 1 867 832 B1**
(45) Veröffentlichungstag und Bekanntmachung des Hinweises auf die Patenterteilung: **05.08.2009**
(21) Anmeldenummer: 07010996.2
(22) Anmeldetag: 04.06.2007
(51) Int. Cl.: E21B 34/02, E21B 34/04, E21B 34/08, E21B 21/10, E21B 43/12, E21B 41/00

(54) **Drosselventil zur Fluidinjektion in geologische Formationen**
Choke valve for fluid injection in geological formations
Valve d'étranglement destinée à l'injection de liquide dans des formations géologiques

(30) Priorität: 14.06.2006 DE 102006027705
(43) Veröffentlichungstag der Anmeldung: 19.12.2007
(73) Patentinhaber: Helmholtz-Zentrum Potsdam Deutsches GeoForschungsZentrum - GFZ, 14473 Potsdam (DE)
(72) Erfinder: Jurczyk, Andreas, 14806 Fredersdorf (DE); Kastner, Oliver, 14542 Schwielowsee/OT Geltow (DE); Otto, Peter, 14471 Potsdam (DE); Legarth, Björn, 12203 Berlin (DE)
(74) Vertreter: Hertz, Oliver

(56) Entgegenhaltungen:
- WO-A-00/79098
- WO-A-99/05387
- US-A- 3 381 708
- US-A- 3 521 853
- US-A- 3 834 414
- US-A- 4 825 895

## Beschreibung

Die Erfindung betrifft ein Drosselventil gemäß dem Oberbegriff von Anspruch 1, eine Fluidinjektionseinrichtung, die mit einem derartigen Drosselventil ausgestattet ist, zur Injektion eines Fluids in eine geologische Formation, und ein Verfahren zur Injektion eines Fluids in eine geologische Formation. Die Erfindung betrifft auch Verfahren zur Montage und Demontage des Drosselventils in einem Injektionsrohrstrang.

Es ist bekannt, in geologischen Formationen Kohlendioxid (CO₂) zu speichern, das z. B. bei der Erdgasverarbeitung oder Verbrennungsprozessen anfällt. Die Speicherung von Kohlendioxid erfolgt typischerweise über ein Injektionsrohr, das in die geologische Formation reicht. Das Injektionsrohr wird aus Stabilitätsgründen in einer bis in den unteren Bereich verrohrten und zementierten Bohrung angeordnet. Zur Herstellung einer hydraulischen Kommunikation mit dem Gebirge werden die Rohre in ausgewählten Bereichen nachträglich perforiert. Vom Endbereich des Injektionsrohres soll das CO₂ großräumig in die Poren des Gesteins der geologischen Formation gefüllt werden.

Bei einer aus der Praxis bekannten technischen Realisierung ist die Injektion von CO₂ im flüssigen Zustand vorgesehen. Bei einer Dichte von etwa 0,7 kg/dm³ und dem erforderlichen Verflüssigungsdruck für CO₂ bei der Einspeisung (ca. 65 bar), wird am tiefsten Ende des Bohrlochs (ca. 800 m) durch den Druck des flüssigen CO₂ der Umgebungsdruck in der geologischen Formation erheblich überschritten. Durch den hohen Überdruck droht eine unerwünschte Veränderung des Gesteins durch Risse, die auch die abdeckende Schicht (z. B. Ton oder Salz) oberhalb der speichernden Formation durchbrechen können. Es besteht daher ein Interesse, den Druck des flüssigen CO₂ im Bohrloch durch ein Drosselventil zu reduzieren.

Es sind zahlreiche Typen von Ventilen zur Reglung und Unterbrechung von Fluidströmen in allen Bereichen der Technik bekannt. Ventile können nach den Absperreigenschaften, den Regeleigenschaften, der Art des Antriebs, dem durchströmenden Medium oder dem Anwendungsgebiet unterschieden werden. Beispielsweise sind aus EP 1 035 360, US 5 535 983 und WO 92/03676 Quetschventile bekannt, bei denen ein schlauchähnlicher Abschnitt durch einen äußeren radialen Druck im Querschnitt reduziert wird. Mit den Quetschventilen ist zwar eine zuverlässige Schließfunktion realisierbar, Nachteile können sich jedoch durch beschränkte Regeleigenschaften ergeben. In DE 36 85 640 T2 werden ein unterirdisches Schiebehülsenventil und dessen Anbringung in einem Rohr beschrieben. Aus EP 0 986 690 B1 ist ein Bohrlochventil mit einem selektiv beweglichen Ventilelement bekannt. DE 696 29 973 offenbart ein ferngesteuertes Ventil mit beweglicher Schieberspindel, das mit Hilfe von Flüssigkeit aktivierbar ist. Diese herkömmlichen Ventile haben Nachteile durch einen komplexen Aufbau und eine beschränkte Funktionssicherheit. Ein Drosselventil ist aus US 3 381 708 auch bekannt.

In DE 25 49 113 wird ein Hülsenventil beschrieben, bei dem der Schließzustand von der Position einer zylindrischen Hülse relativ zu einer Ventilplatte abhängig ist. Die Hülse ist mit einem Ringkolben verbunden, der in einem Zylinder gleitend gelagert ist. Durch Beaufschlagung des Zylinders mit einem Druckmittel kann der Ringkolben verschoben und damit das Hülsenventil betätigt werden. Das Hülsenventil gemäß DE 25 49 113 hat durch seinen komplexen Aufbau und die beschränkte Fähigkeit zur genau einstellbaren Druckreduzierung insbesondere unter Hochdruckbedingungen erhebliche Nachteile, durch die eine Anwendung bei geotechnischen Aufgaben und insbesondere bei der Injektion von CO₂ ausgeschlossen ist.

Generell haben die herkömmlichen Ventile des Weiteren wenigstens einen der folgenden Nachteile. Erstens verfügen sie nicht gleichzeitig über eine sichere Schließfunktion und ein ausgeprägtes Regelverhalten. Zweitens muss die Energie zur Regelung über gesonderte fluidische oder elektrische Leitungen zugeführt werden. Ein weiterer Nachteil besteht in erheblichen Beschränkungen bei der Wartung und Austauschbarkeit der herkömmlichen Ventile.

Die Aufgabe der Erfindung ist es, ein verbessertes Drosselventil, insbesondere zur Injektion eines Fluids in einen unterirdischen Speicher bereitzustellen, mit dem die Nachteile der herkömmlichen Drosselventile vermieden werden. Die Aufgabe der Erfindung ist es ferner, eine verbesserte Fluidinjektionseinrichtung bereitzustellen, mit der die Nachteile und Beschränkungen der herkömmlichen Techniken zur Fluidinjektion in unterirdische Speicher vermieden werden. Die Aufgabe der Erfindung ist es auch, ein verbessertes Verfahren zur Injektion eines Fluids in einen unterirdischen Speicher, insbesondere in eine geologische Formation bereitzustellen.

Diese Aufgaben werden durch ein Drosselventil, eine Fluidinjektionseinrichtung und ein Injektionsverfahren mit den Merkmalen der Ansprüche 1, 16 und 22 gelöst. Vorteilhafte Ausführungsformen und Anwendungen der Erfindung ergeben sich aus den abhängigen Ansprüchen.

Vorrichtungsbezogen basiert die Erfindung gemäß einem ersten Aspekt auf der allgemeinen technischen Lehre, ein Drosselventil mit einem Fluidkanal bereitzustellen, der Teil eines durch Druckbeaufschlagung verschiebbaren Ringkolben ist. Der Fluidkanal stellt eine verschließbare und regelbare Verbindung zwischen einer Hochdruckseite und einer Niedrigdruckseite des Drosselventils dar. Auf der Niedrigdruckseite weist der Fluidkanal ein offenes Ende auf. Auf der Hochdruckseite sind ein in Längsrichtung (axialer Richtung) des Drosselventils mit einem seitlich auskragenden Dichtteller verschlossenes Ende und eine seitliche (radiale) Drosselöffnung vorgesehen. In Abhängigkeit von der Einstellung des Ringkolbens kann der Fluidkanal so positioniert werden, dass der Dichtteller dicht schließend auf einer hochdruckseitig vorgesehenen Deckplatte aufsitzt (Schließzustand) oder die seitliche Drosselöffnung freigegeben ist (steuerbarer Durchlasszustand). Die seitliche Drosselöffnung des Fluidkanals wirkt mit der Deckplatte des Drosselventils so zusammen, dass im Durchlasszustand in Abhängigkeit von der Einstellung des Ringkolbens mit der Deckplatte ein Teil der Drosselöffnung abgedeckt oder die Drosselöffnung vollständig freigegeben wird.

Vorteilhafterweise hat das Drosselventil einen kompakten, an die geometrischen Bedingungen im Bohrloch angepassten Aufbau mit einer hohen Druckbeständigkeit, wobei durch die Bereitstellung des Dichttellers und der seitlichen Drosselöffnung die Schließ- und Durchlassfunktionen des Drosselventils getrennt optimiert sind. Das Drosselventil erfüllt gleichzeitig eine zuverlässige Schließfunktion und eine präzise, steuerbare Öffnung im Durchlasszustand, so dass mit hoher Zuverlässigkeit und Sicherheit flüssige Fluide, insbesondere flüssiges CO₂ beim zulässigen Injektionsdruck in eine geologische Formation einführbar sind.

Gemäß einer bevorzugten Ausführungsform der Erfindung weist die Drosselöffnung eine geometrische Form (Drosselkontur) mit einer Erweiterung in Längsrichtung hin zur Niedrigdruckseite des Drosselventils, z. B. eine Dreieckform auf. Vorteilhafterweise erhält damit die Durchlassfunktion des Drosselventils eine charakteristische, nicht-lineare Kennlinie. Mit zunehmender Öffnung des Drosselventils ergibt sich für eine vorbestimmte Verschiebung des Ringkolbens ein jeweils zunehmender Öffnungszuwachs. Vorteilhafterweise kann damit die Genauigkeit der Steuerung des Drosselventils beim Öffnen und im Durchlasszustand verbessert werden.

Der Ringkolben des öffnungsgemäßen Kolbenventils ist in einem Kolbenraum angeordnet, der beidseitig des Ringkolbens entsprechend einen hochdruckseitigen und einen niedrigdruckseitigen Ringraum aufweist. In einer bevorzugten Ausführungsform der Erfindung ist der niedrigdruckseitige Ringraum dazu vorgesehen, zur Betätigung des Drosselventils mit einem Arbeitsdruck beaufschlagt zu werden. Vorteilhafterweise wird bei Ausfall des Arbeitsdrucks der Ringkolben durch den auf der Hochdruckseite anliegenden Druck des zu injizierenden Fluids in den Schließzustand überführt. Hierzu weist der Fluidkanal erfindungsgemäß eine seitliche Verbindungsöffnung auf, durch die der Fluidkanal mit dem hochdruckseitigen Ringraum verbunden ist.

Zur Beaufschlagung des niedrigdruckseitigen Ringraums mit dem Arbeitsdruck ist vorzugsweise eine Drosselleitung vorgesehen, über die eine Verbindung des niedrigdruckseitigen Ringraums mit der Umgebung gebildet werden kann. Vorteilhafterweise ist durch die hydraulische Druckbeaufschlagung des Drosselventils eine einzige Drosselleitung durch den Ventilkörper des Drosselventils ausreichend, so dass der kompakte und stabile Aufbau des Drosselventils nicht beeinträchtigt wird. Des Weiteren wird mit der Drosselleitung die Betriebssicherheit verbessert. Wenn beispielsweise ein unerwünschter Druckabfall auftritt, führt diese Störung zum selbsttätigen Schließen des Drosselventils. Selbst wenn der Druckabfall abrupt erfolgt, wird durch die Drosselfunktion der Drosselleitung ein Druckschlag am Drosselventil vermieden.

Erfindungsgemäß kann der Ventilkörper des Drosselventils eine radialsymmetrische Außenform relativ zur Längsausdehnung des Kolbenraums aufweisen. Vorzugsweise sind auf der Oberfläche des Ventilkörpers Dichtungen vorgesehen, die bei eingesetztem Drosselventil mit der Innenwand eines Ventilsitzes zur Aufnahme des Drosselventils zusammenwirken. Gemäß einer weiteren bevorzugten Ausführungsform der Erfindung ist der Ventilsitz für das Drosselventil als Teil eines Injektionsrohres angeordnet, das in die geologische Formation führt. Durch die Integration des Ventilsitzes in das Injektionsrohr ergeben sich Vorteile für den kompakten Einbau des Drosselventils in das Injektionsrohr.

Gemäß einer weiteren bevorzugten Variante der Erfindung ist ein Öffnungsventil vorgesehen, mit dem die Verbindung des niedrigdruckseitigen Ringraums mit der Umgebung geschlossen werden kann. Gemäß einer bevorzugten Variante kann das Öffnungsventil mechanisch derart betätigbar sein, dass es geöffnet ist, wenn das Drosselventil in das Injektionsrohr eingesetzt ist, und geschlossen ist, wenn das Drosselventil nicht in das Injektionsrohr eingesetzt ist. Vorteilhafterweise wird in diesem Fall das Innere des Injektionsrohres nur dann mit dem Arbeitsdruck beaufschlagt, wenn das Drosselventil in das Injektionsrohr eingesetzt ist.

Vorzugsweise ist das Öffnungsventil Teil des Ventilsitzes, so dass durch das Öffnungsventil eine Verbindung zwischen der Umgebung des Ventilsitzes, insbesondere des Injektionsrohres, und der Drosselleitung und dem Kolbenraum des Ventilkörpers gebildet wird. Für die mechanische Betätigung des Öffnungsventils ist vorzugsweise vorgesehen, dass das Öffnungsventil beim Einsetzen des Drosselventils in den Ventilsitz geöffnet wird. Das Öffnungsventil ist federnd in einer Durchgangsöffnung des Ventilsitzes angebracht. Eine äußere Feder bewirkt ein Verschließen des Öffnungsventils bei Entnahme des Drosselventils aus dem Ventilsitz.

Die Montierbarkeit des Drosselventils wird vorteilhafterweise vereinfacht, wenn gemäß einer weiteren bevorzugten Ausführungsform der Erfindung der Ventilkörper mindestens eine radial wirkende Eingriffseinrichtung aufweist. Als Eingriffseinrichtung ist vorzugsweise mindestens ein radial, federnd verschwenkbarer Verriegelungshebel zum Eingriff des Ventilkörpers in einen Vorsprung im Ventilsitz oder Injektionsrohr vorgesehen. Alternativ oder zusätzlich ist des Weiteren vorzugsweise eine innere Montagenut des Ventilkörpers vorgesehen, die zum Eingriff eines Montagewerkzeugs eingerichtet ist. Besonders bevorzugt sind der mindestens eine radiale Verriegelungshebel und die innere Montagenut Teil einer Werkzeugaufnahme, in die ein Montagewerkzeug des Drosselventils einsetzbar ist. Im eingesetzten Zustand des Montagewerkzeugs ist der radiale Verriegelungshebel so verschwenkt, dass der Eingriff mit dem Injektionsrohr oder dem Ventilsitz freigegeben ist, so dass durch den Eingriff eines Montagewerkzeugs in die Montagenut das Drosselventil aus dem Injektionsrohr gezogen werden kann.

Das Montagewerkzeug zum Eingriff in die Werkzeugaufnahme weist vorzugsweise radial verschwenkbare Haltezungen auf, welche zum Eingriff in eine ringförmige Nut, insbesondere in die innere Montagenut des Drosselventils eingerichtet sind. Das Montagewerkzeug stellt einen unabhängigen Gegenstand der Erfindung dar.

Die Lösung der obigen Aufgabe beruht gemäß einem weiteren Aspekt der Erfindung auf der Bereitstellung einer Fluidinjektionseinrichtung mit einem Injektionsrohr, an dessen Injektionsende das erfindungsgemäße Drosselventil vorgesehen ist, einem Druckraum zur Aufnahme eines Druckfluids und zur Bereitstellung eines Arbeitsdruckes, unter dessen Wirkung der Ringkolben des Drosselventils verschiebbar ist, und einer Druckquelle zur Erzeugung des Arbeitsdrucks im Druckfluid. Vorteilhafterweise wird damit eine hydraulische Steuerung des Drosselventils im Bohrloch ermöglicht. Der Injektionsdruck des in die geologische Formation einzuführenden Fluids kann unmittelbar am Injektionshorizont untertägig eingestellt werden.

Die erfindungsgemäße Fluidinjektionseinrichtung ist vorzugsweise mit einem Außenrohr ausgestattet, welches gemeinsam mit dem Injektionsrohr den Druckraum bildet. Der Innendurchmesser des Außenrohres ist größer als der Außendurchmesser des Injektionsrohres, so dass ein ringförmiger Druckraum gebildet wird.

Weitere Vorteile für die Sicherheit bei der Fluidinjektion in geologische Formationen ergeben sich aus der Bereitstellung einer Drucksensoreinrichtung, die in der geologischen Formation in Verbindung mit der Fluidinjektionseinrichtung oder am stromabwärts gelegenen, freien Ende des Injektionsrohres oder unmittelbar an das Drosselventil angrenzend im Injektionsrohr angeordnet ist. Gemäß einer Variante der Erfindung kann vorgesehen sein, dass die Druckquelle mit vorbestimmten Steuersignalen, wie zum Beispiel Sensorsignalen der Drucksensoreinrichtung steuerbar ist. Die Drucksensoreinrichtung ermöglicht insbesondere die Bildung eines Regelkreises, indem das Drosselventil in Abhängigkeit von den Sensorsignalen der Drucksensoreinrichtung betätigbar ist. Es ist vorzugsweise vorgesehen, den Arbeitsdruck im Druckraum in Abhängigkeit von den Sensorsignalen einzustellen. Vorteilhafterweise wird damit ein zusätzlicher Freiheitsgrad bei der Einstellung des Arbeitsdrucks im niedrigdruckseitigen Ringraum in Abhängigkeit vom Druck in der geologischen Formation bereitgestellt.

Die Lösung der oben genannten Aufgabe beruht gemäß einem weiteren Aspekt der Erfindung auf der Bereitstellung eines Injektionsverfahrens, bei dem das erfindungsgemäße Drosselventil in das Injektionsrohr der Fluidinjektionseinrichtung eingesetzt und durch den Arbeitsdruck in der Umgebung des Drosselventils so eingestellt wird, dass die Injektion des Fluids, zum Beispiels des CO₂ bei einem vorbestimmten Injektionsdruck erfolgt. Vorteilhafterweise kann das Verfahren mit großer Flexibilität realisiert werden, indem das Injektionsrohr mit dem Drosselventil in ein vorhandenes Bohrloch eingeführt und zur Fluidinjektion eingerichtet wird.

Weitere Einzelheiten und Vorteile der Erfindung werden im folgenden unter Bezugnahme auf die beigefügten Zeichnungen beschrieben. Es zeigen:
- Figur 1:: eine Ausführungsform einer erfindungsgemäßen Fluidinjektionseinrichtung,
- Figuren 2: und 3: Schnittansichten einer bevorzugten Ausführungsform des erfindungsgemäßen Drosselventils im geöffneten und im geschlossenen Zustand, und
- Figuren 4: und 5: Schnittansichten einer weiteren bevorzugten Ausführungsform des erfindungsgemäßen Drosselventils mit einem Montagewerkzeug und mit einem Ziehwerkzeug.

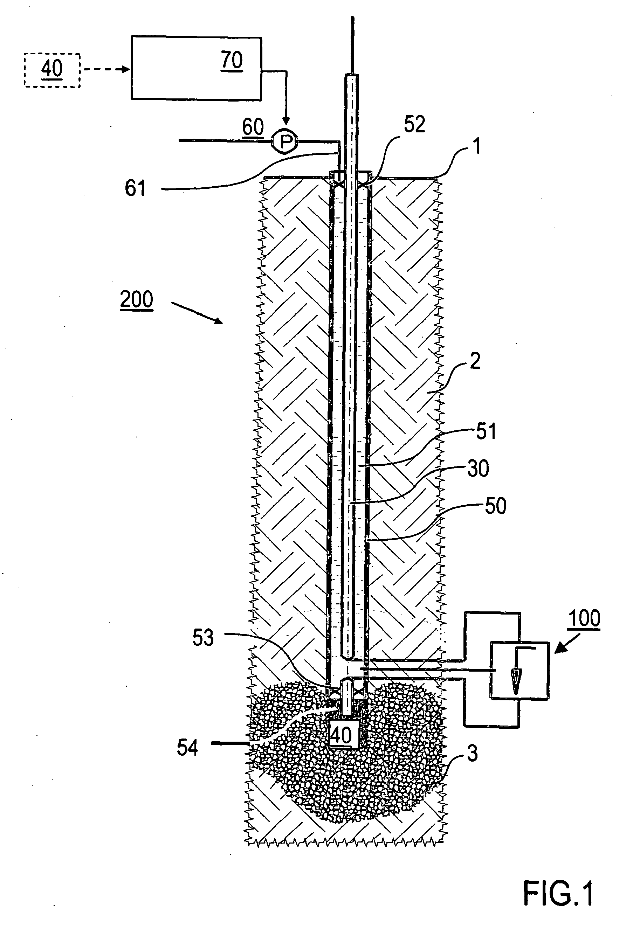

Figur 1 zeigt schematisch die geologische Speicherung von Kohlendioxid durch eine Injektionsbohrung. Die Injektionsbohrung verläuft von der Oberfläche 1 der Erdkruste 2 bis zur geologischen Formation 3, in der das Kohlendioxid gespeichert werden soll. Die geologische Formation 3 umfasst beispielsweise poröses Gestein. Die Injektionsbohrung ist mit einer vertikalen Richtung illustriert, kann aber abweichend gegenüber der Vertikalen geneigt sein oder sogar horizontal verlaufen.

Die erfindungsgemäße Fluidinjektionseinrichtung 200 umfasst in der Injektionsbohrung das Außenrohr 50, in dem das Injektionsrohr 30 verläuft. Zwischen den Injektions- und Außenrohren 30, 50 ist der ringförmige Druckraum 51 gebildet, der durch obere und untere Packer 52, 53 geschlossen ist. Das Injektionsrohr 30 verläuft durch den oberen und den unteren Packer 52, 53 bis in einen unteren Endbereich 54 des Außenrohres 50, in dem das Außenrohr 50 perforiert ist. Im unteren Endbereich 54 befindet sich des Weiteren eine schematisch dargestellte Drucksensoreinrichtung 40 (zum Beispiel mit einem optischen Drucksensor, wie dem "Optical Sensor Mandrel", Hersteller Weatherford) zur Erfassung des Drucks in der geologischen Formation 3.

Das Außenrohr 50 ist in der Erdkruste 2 einzementiert. Die Tiefe der Injektionsbohrung bis zur geologischen Formation 3 beträgt zum Beispiel 800 m. In dieser Tiefe herrscht ein Umgebungsdruck von rund 80 bar. Dieser Umgebungsdruck würde bei der Einspeisung von verflüssigtem Kohlendioxid, dessen Verflüssigungsdruck an der Oberfläche 1 der Erdkruste 2 bei 25 °C bereits rund 65 bar beträgt, durch die im Injektionsrohr 30 gebildete Flüssigkeitssäule in der geologischen Formation 3 erheblich überschritten werden. Zur Reduzierung des Fluiddrucks am Injektionsort ist das Drosselventil 100 vorgesehen.

Die Dimensionen der Injektionsbohrung und des Drosselventils 100 werden in Abhängigkeit von den Bedingungen der konkreten Anwendung, insbesondere in Abhängigkeit von dem pro Zeiteinheit zu injizierenden Fluid gewählt.

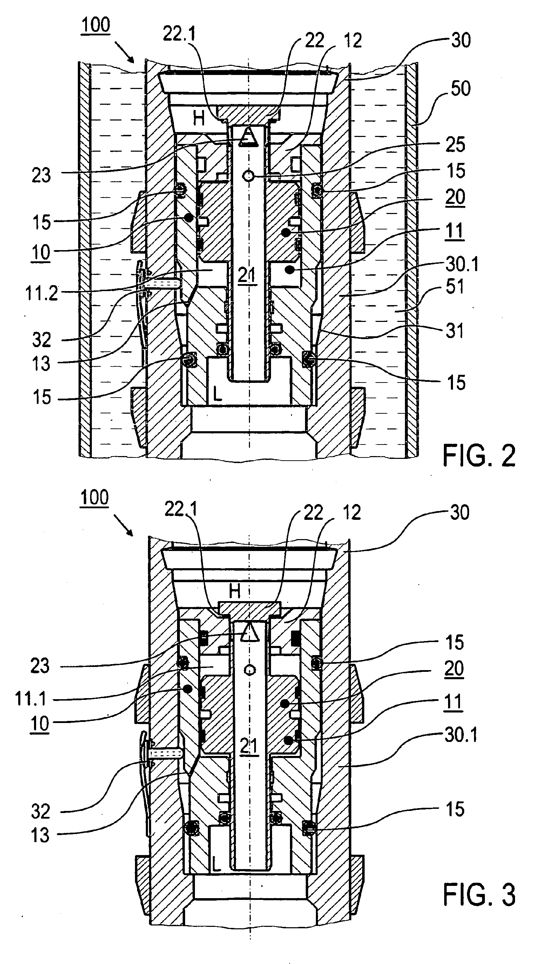

Das erfindungsgemäße Drosselventil 100 ist im Injektionsrohr 30 angeordnet. Vorzugsweise befindet sich das Drosselventil 100 gemäß der schematisch vergrößerten Illustration am unteren Ende des Injektionsrohres 30 unmittelbar oberhalb des unteren Packers 53. Einzelheiten von dem Drosselventil 100 und dessen Steuerung mit dem Arbeitsdruck des Druckfluids im Druckraum 51 sind unten unter Bezug auf die Figuren 2 und 3 erläutert. Erfindungsgemäß wird das Drosselventil 100 durch den Hydraulikdruck des Druckfluids im Druckraum 51 gesteuert. Als Druckfluid wird gemäß einem wichtigen Merkmal der Erfindung vorzugsweise das im Ringraum anstehende Wasser verwendet, das mit einem korrosionsinhibierender Zusatz versetzt sein kann. Vorteilhafterweise werden damit zur Druckübertragung keine zusätzlichen Leitungen oder Medien benötigt, sondern nur die im abgedichteten Ringraum der Bohrung ohnehin vorhandene Flüssigkeitssäule.

Der Druckraum 51 ist zur Beaufschlagung mit dem Arbeitsdruck über eine Druckleitung 61, die durch den oberen Packer 52 verläuft, mit der Druckquelle 60 verbunden. Die Druckquelle 60 umfasst einen Druckerzeuger, wie beispielsweise einen Kompressor oder einen mechanisch betätigten Kolben, zur Erzeugung des Arbeitsdrucks im Bereich zum Beispiel bis zu 20 bar. Die Druckquelle 60 ist mit einer Steuereinrichtung 70 verbunden. Vorzugsweise ist die Steuereinrichtung 70 auch mit der Drucksensoreinrichtung 40 (siehe gestrichelter Pfeil) verbunden, um über die Druckquelle 60 den Arbeitsdruck im Druckraum 51 in Abhängigkeit vom Druck im Endbereich 54 des Außenrohrs 50 einzustellen.

Die Funktion des Drosselventils 100 wird im Folgenden unter Bezug auf den geöffneten Zustand (Figur 2) und den geschlossenen Zustand (Figur 3) beschrieben.

Figur 2 zeigt den unteren Teil der Fluidinjektionseinrichtung mit dem Außenrohr 50 und dem Injektionsrohr 30, zwischen denen der Druckraum 51 mit dem Druckfluid gebildet ist. Das erfindungsgemäße Drosselventil 100 umfasst einen Ventilkörper 10, der sich in Längsrichtung des Injektionsrohres 30 erstreckt und einen inneren Kolbenraum 11, eine Deckplatte 12, eine Drosselleitung 13 und radial wirkende Dichtelemente 15 (O-Ringe) aufweist. Der Ventilkörper 10 ist in einem Ventilsitz 30.1 angeordnet, der ein Teil des Injektionsrohres 30 ist und innere Anlaufschrägen 31 aufweist. Das Drosselventil 100 ist, abgesehen von der Drosselleitung 13 und Einzelheiten des Fluidkanals 21 (siehe unten), rotationssymmetrisch aufgebaut.

Das mit der Deckplatte 12 geschlossene Ende des Kolbenraums 11 ist auf der Hochdruckseite H des Drosselventils 100 vorgesehen, an der zum Beispiel ein Druck der Flüssigkeitssäule des Kohlendioxid im Injektionsrohr 30 in Höhe von rund 110 bar herrscht. Das entgegengesetzte Ende des Ventilkörpers 10 weist zur Niedrigdruckseite L, an der ein Druck von zum Beispiel 80 bar eingestellt werden soll.

Im Kolbenraum 11 ist der rotationssymmetrische Ringkolben 20 mit dem axialen Fluidkanal 21 vorgesehen. Der Ringkolben 20 ist im Kolbenraum 11 in der Längsrichtung radial dichtend und axial verschiebbar angeordnet. Der Fluidkanal 21 ist im Ventilkörper 10 zwischen der Hochdruckseite H und der Niedrigdruckseite L angeordnet. Das Ende des Fluidkanals 21 auf der Hochdruckseite H ist durch einen Dichtteller 22 verschlossen, der relativ zur Außenform des Fluidkanals 21 eine Auskragung mit einer ringförmigen Abdichtung 22.1 aufweist. An den Dichtteller 22 angrenzend ist in der Wand des Fluidkanals 21 eine Drosselöffnung 23 vorgesehen. Des Weiteren ist in der Wand des Fluidkanals 21 eine Verbindungsöffnung 25 zur Verbindung des Fluidkanals 21 mit dem Kolbenraum 11 vorgesehen.

Mit dem illustrierten Ventilaufbau kann vorteilhafterweise der Injektionsdruck auf der Niedrigdruckseite L durch eine Drosselung mit der Drosselöffnung 23 eingestellt werden. Für eine Druckeinstellung ist die Drosselöffnung 23 mit einer bestimmten Drosselkontur versehen, die sich in axialer Richtung des Fluidkanals 21 zur Niedrigdruckseite L hin erweitert. Die Drosselkontur wird zum Beispiel durch eine Ausfräsung des Fluidkanals 21 gebildet. Es ist vorzugsweise eine dreieckige Kontur vorgesehen.

Der Kolbenraum 11 wird durch den Ringkolben 20 in den hochdruckseitigen Ringraum 11.1 (siehe Figur 3, Darstellung ohne das Außenrohr 50 und den Druckraum 51) und den niedrigdruckseitigen Ringraum 11.2 (siehe Figur 2) unterteilt. In Abhängigkeit vom Druckunterschied zwischen den hochdruckseitigen und niedrigdruckseitigen Ringräumen 11.1, 11.2 kann der Ringkolben im Kolbenraum 11 so verschoben werden, dass die Drosselöffnung 23 freigegeben (siehe Figur 2) oder geschlossen (siehe Figur 3) ist. Zur Einstellung des geöffneten Zustands (Durchlasszustand) wird der Arbeitsdruck im Druckraum 51 so erhöht, dass der nach oben wirkende Steuerdruck im niedrigdruckseitigen Ringraum 11.2 die nach unten gerichtete Kraftwirkung des Drucks auf der Hochdruckseite H übersteigt, der durch das zu injizierende Fluid und den Druck im Reservoir gebildet wird. Der Arbeitsdruck wird hydraulisch über das Öffnungsventil 32 und die Drosselleitung 13 in den niedrigdruckseitigen Ringraum 11.2 übertragen, während im hochdruckseitigen Ringraum 11.1 durch die Fluidverbindung über die Drosselöffnung 23 und die Verbindungsöffnung 25 der Druck der Hochdruckseite H des Drosselventils 100 herrscht. Entsprechend kann das Fluid von der Hochdruckseite über die Drosselöffnung 23 durch den Fluidkanal 21 zur Niedrigdruckseite und auch durch die Verbindungsöffnung 25 in den hochdruckseitigen Ringraum 11.1 strömen.

Auf der Niedrigdruckseite L kann der aktuelle Druck mit der Drucksensoreinrichtung 40 (siehe Figur 1) erfasst werden. Wenn der Druck einen vorbestimmten Sicherheitsdruck übersteigt, wird das Drosselventil 100 teilweise oder vollständig geschlossen. Hierzu wird der Arbeitsdruck im Druckraum 51 vermindert, so dass entsprechend auch der Druck im niedrigdruckseitigen Ringraum 11.2 sinkt. Unter der Wirkung des Fluiddrucks auf der Hochdruckseite H, der auf den hochdruckseitigen Ringraum 11.1 übertragen wird, ergibt sich die Verschiebung des Ringkolbens 20. Dabei wird der Fluidkanal 21 zunächst so verschoben, dass die Drosselöffnung 23 teilweise durch die axiale Ausdehnung der Deckplatte 12 (Dicke der Deckplatte 12) abgedeckt wird. Entsprechend wird die Durchlässigkeit des Drosselventils 100 vermindert. Bei weiterer Absenkung des Drucks im niedrigdruckseitigen Ringraum 11.2 wird der Fluidkanal 21 mit dem Ringkolben 20 soweit verschoben, dass der Dichtteller 22 auf der Deckplatte 12 aufsitzt (siehe Figur 3). In dieser Situation ist das Drosselventil 100 im geschlossenen Zustand. Der Fluidkanal 21 ist durch die Dichtung 22.1 vollständig geschlossen.

Im geöffneten Zustand strömt das flüssige Fluid, zum Beispiel Kohlendioxid, von der Hochdruckseite H zum Drosselventil 100, wo es zunächst die Drosselöffnung 23 passiert, an der die gewünschte Druckabsenkung erfolgt. Mit vermindertem Druck strömt das Fluid durch den Fluidkanal 21 an der Niedrigdruckseite des Drosselventils 100 in die geologische Formation 3. Die Einstellung der Fläche der Drosselöffnung 23 und damit des Druckabfalls erfolgt durch die axiale Verschiebung des Ringkolbens 20 im Ventilkörper 10. Die Stellung der Drosselkontur relativ zur Deckplatte 12, die eine Drosselkante bildet, bestimmen den Druckabfall. Der Druckabfall ist weiterhin vom Volumenstrom abhängig.

Die Steuerung des Ringkolbens im Drosselventil 100 erfolgt durch eine Differenzdrucksteuerung. Die Kräftebilanz am Ringkolben umfasst zwei zur Niedrigdruckseite L (abwärts) gerichtete Teilkräfte, die durch den Druck des ungedrosselten Fluids auf die effektive Oberseite des Drosselventils, insbesondere die Oberseite des Dichttellers 22, und durch den gedrosselten Druck des Fluids im hochdruckseitigen Kolbenraum 11.1 gebildet werden, und eine zur Hochdruckseite H (aufwärts) gerichtete Teilkraft, die durch den Arbeitsdruck des Druckfluids im Druckraum 51 beziehungsweise im niedrigdruckseitigen Kolbenraum 11.2 gebildet wird. Durch die Steuerung des Arbeitsdrucks mit der Druckquelle 60 (siehe Figur 1) kann diese Kräftebilanz so beeinflusst werden, dass ein vorbestimmter Druckabfall an der Drosselöffnung 23 eingestellt wird. Das Drosselventil 100 wird geöffnet, indem der Druck im Druckraum 51 so erhöht wird, dass die aufwärtswirkende Kraft größer als die resultierende abwärtswirkende Kraft am Ringkolben 20 ist. Die Einstellung der Drosselöffnung 23 kann somit durch die Einstellung eines geeigneten Differenzdrucks am Ringkolben eingestellt werden. Sobald der Arbeitsdruck abfällt, schließt das Drosselventil 100 automatisch, da in diesem Fall ausschließlich die abwärtsgerichteten Teilkräfte wirken.

Die Einstellung des Differenzdrucks kann in Abhängigkeit von dem gemessenen Druck in der geologischen Formation 3 mit einem Regelkreis unter Einbeziehung der Steuereinrichtung 70 und der Druckquelle 60 (siehe Figur 1) erfolgen. Im Regelkreis kann ein Regelalgorithmus implementiert sein, der den aktuellen Druck am Injektionshorizont in der geologischen Formation 3 als Stellgröße verwendet. Sobald der Druck am Injektionshorizont einen vorbestimmten Sicherheitsdruck überschreitet, wird der Arbeitsdruck im Druckraum 51 und damit im niedrigdruckseitigen Kolbenraum 11.2 vermindert, so dass der Ringkolben 20 abwärts geschoben und die Drosselöffnung 23 verkleinert wird.

Ein abruptes Abfließen des Druckfluids aus dem niedrigdruckseitigen Ringraum 11.2 wird durch die Dimensionierung der Drosselleitung 13 vermieden. Der Durchmesser der Drosselleitung 13 ist typischerweise geringer als 5 mm, kann aber alternativ insbesondere in Abhängigkeit von dem pro Zeiteinheit zu injizierenden Fluid größer gewählt werden. Falls andererseits der Druck in der geologischen Formation zum Beispiel aus geophysikalischen Gründen unvorhergesehen ansteigt, so wirkt sich dieser Druckanstieg bis in den hochdruckseitigen Ringraum 11.1 aus. Dadurch wird die abwärts gerichtete Teilkraft am Ringkolben 20 vergrößert, so dass sich das Drosselventil 100 schließt. Vorteilhafterweise wird damit die unbeabsichtigte Beladung eines fehlerhaften Geospeichers ausgeschlossen.

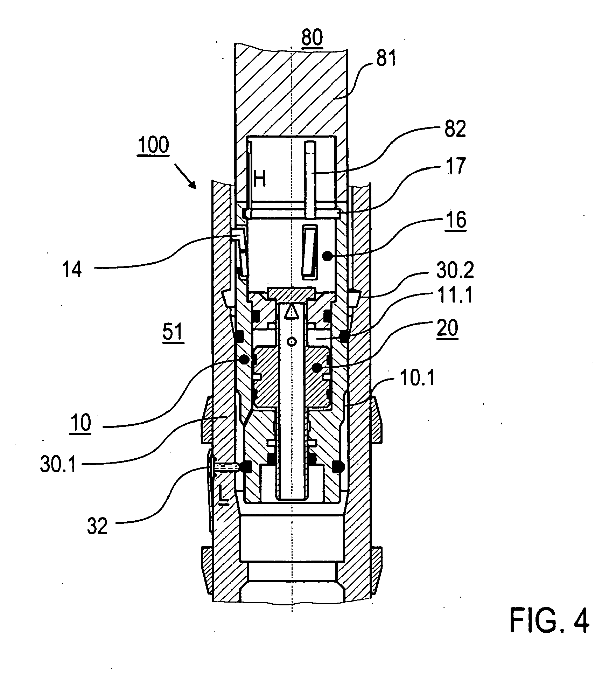

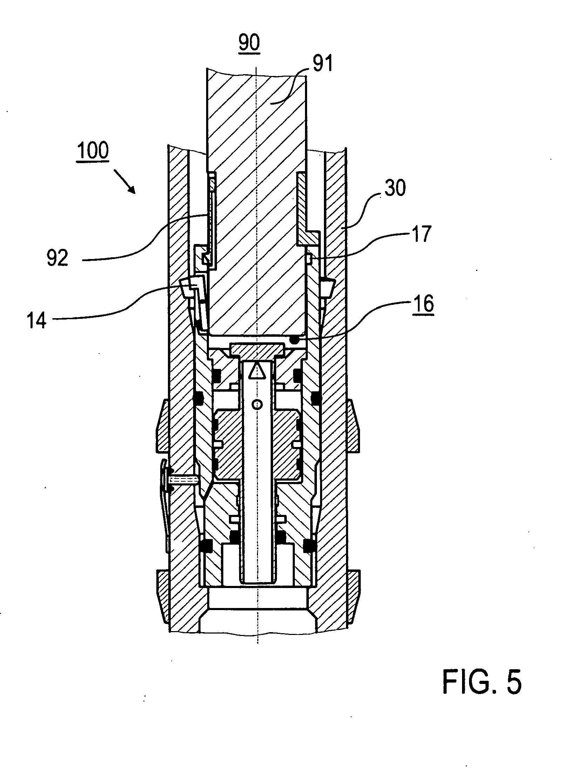

Das Drosselventil 100 ist vorteilhafterweise bei Bedarf vom Injektionsrohr 30 trennbar, so dass der komplette Leitungsquerschnitt des Injektionsrohrs 30 zum Beispiel für Wartungsarbeiten in tiefer liegenden Rohrabschnitten oder für Messungen im Bohrloch zur Verfügung steht. Die Positionierung und Trennung des Drosselventils 100 im beziehungsweise vom Ventilsitz 30.1 erfolgt vorzugsweise mit einem Montagewerkzeug 80 und einem Ziehwerkzeug 90. Die Funktion der Werkzeuge 80, 90 ist in den Figuren 4 und 5 illustriert.

Bei der in Figur 4 dargestellten Ausführungsform des erfindungsgemäßen Drosselventils 100 ist an dessen Hochdruckseite H eine hohlzylinderförmige Werkzeugaufnahme 16 mit radialen Verriegelungshebeln 14 und einer inneren Montagenut 17 vorgesehen. Das Montagewerkzeug 80 umfasst einen festen Werkzeugträger 81, an dessen unteren Ende federnde Haltezungen 82 vorgesehen sind. Die Haltezungen 82 sind relativ zur Längsausdehnung des Werkzeugträgers 81 verschwenkbar und zum Eingriff in die Montagenut 17 ausgelegt.

Beim Einsetzen des Drosselventils 100 (Figur 4) hängt das Drosselventil 100 mit der Montagenut 17 und den Haltezungen 82 am Montagewerkzeug 80. Sobald das Drosselventil durch Absenkung des Montagewerkzeugs 80 den Ventilsitz 30.1 erreicht hat, wird durch die Anlaufschräge 10.1 auf der Außenseite des Ventilkörpers 10 das Öffnungsventil 32 geöffnet, so dass der niedrigdruckseitige Ringraum 11.2 mit dem Arbeitsdruck im Druckraum 51 beaufschlagt wird. Entsprechend erfolgt eine Verschiebung des Ringkolbens 20 zur Hochdruckseite H, so dass das Drosselventil 100 geöffnet ist. Gleichzeitig greifen die Verriegelungshebel 14 in eine Sperrnut 30.2 des Ventilsitzes 30.1, so dass das Drosselventil 100 fixiert wird (Figur 5). In dieser Situation kann das Montagewerkzeug 80 von der Werkzeugaufnahme 16 gelöst werden, wobei die Haltezungen 82 aus der Montagenut 17 ausrasten, und durch das Injektionsrohr 30 zurückgezogen werden.

Der Ausbau des Drosselventils 100 erfolgt umgekehrt durch ein Einsetzen eines Ziehwerkzeugs 90 in die Werkzeugaufnahme 16 und einen Rückzug des Drosselventils 100 mit dem Ziehwerkzeug 90. Das Ziehwerkzeug 90 umfasst einen Werkzeugkörper 91 und Ziehhaken 92. Beim Einsetzen des Ziehwerkzeugs 90 wird der Werkzeugkörper 91 in den oberen Bereich des Ventils eingetaucht, so dass die nach innen ragenden, unteren Hälftender Sperrriegel 14 nach außen gedrückt werden, so dass die oberen Hälften eingeklappt werden und das Ventil im Ventilsitz entriegelt wird. Die Ziehhaken 92 rasten in die Montagenut 15, so dass das Ventil mit dem Ziehwerkzeug 90 aus der Bohrung gezogen werden kann. Im ausgebauten Zustand ist das Innere des Injektionsrohres 30 vom äußeren Druckraum 51 getrennt, da das Öffnungsventil 33 geschlossen ist. Vorteilhafterweise wird dadurch eine hydraulische Entkoppelung vom Druckraum 51 erreicht.

Die in der vorstehenden Beschreibung, den Zeichnungen und den Ansprüchen offenbarten Merkmale der Erfindung können sowohl einzeln als auch in Kombination für die Verwirklichung der Erfindung in Ihren verschiedenen Ausgestaltungen von Bedeutung sein.

## Patentansprüche

1. Drosselventil (100), insbesondere zur Injektion eines Fluids in eine geologische Formation, das umfasst:
- einen Ventilkörper (10) mit einem Kolbenraum (11),
- einen Ringkolben (20) mit einem axialen Fluidkanal (21), der sich von einer Hochdruckseite (H) zu einer Niedrigdruckseite (L) des Drosselventils erstreckt, wobei der Ringkolben (20) im Kolbenraum (11) verschiebbar ist und der Fluidkanal (21) in Abhängigkeit von der Position des Ringkolbens (20) im Kolbenraum (11) durchlässig oder geschlossen ist,
- eine Deckplatte (12), die an der Hochdruckseite (H) des Ventilkörpers (10) vorgesehen ist und durch die der Fluidkanal (21) vom Kolbenraum (11) zur Hochdruckseite (H) ragt,
**dadurch gekennzeichnet, dass**
- der Fluidkanal (21) in axialer Richtung mit einem Dichtteller (22) verschlossen ist, der auf der Hochdruckseite (H) auf die Deckplatte (12) dichtend aufsetzbar ist, und
- der Fluidkanal (21) an den Dichtteller (22) angrenzend eine radiale Drosselöffnung (23) aufweist.

2. Drosselventil nach Anspruch 1, bei dem die Drosselöffnung (23) eine Drosselkontur aufweist, die sich in axialer Richtung zur Niedrigdruckseite (L) erweitert.

3. Drosselventil nach Anspruch 1 oder 2, bei dem der Ringkolben (20) einen Kolbenkörper (24) aufweist, durch den der Kolbenraum (11) in einen hochdruckseitigen und einen niedrigdruckseitigen Ringraum (11.1, 11.2) geteilt wird, und der niedrigdruckseitige Ringraum (11.2) eingerichtet ist, mit einem Arbeitsdruck in einer Umgebung des Ventilkörpers (10) beaufschlagt zu werden.

4. Drosselventil nach Anspruch 3, bei dem der Fluidkanal (21) durch eine radiale Verbindungsöffnung (25) mit dem hochdruckseitigen Ringraum (11.1) verbunden ist.

5. Drosselventil nach Anspruch 3 oder 4, bei dem der niedrigdruckseitige Ringraum (11.2) über eine Drosselleitung (13) mit der Umgebung des Ventilkörpers (10) verbunden ist.

6. Drosselventil nach mindestens einem der vorhergehenden Ansprüche, bei dem die Oberfläche des Ventilkörpers (10) eine radialsymmetrische Außenkontur aufweist.

7. Drosselventil nach mindestens einem der vorhergehenden Ansprüche, bei dem auf einer Oberfläche des Ventilkörpers (10) radial wirkende Dichtelemente (15) vorgesehen sind.

8. Drosselventil nach mindestens einem der vorhergehenden Ansprüche, das einen Ventilsitz (31) aufweist, der Teil eines Injektionsrohres (30) ist.

9. Drosselventil nach Anspruch 8, bei dem im Ventilsitz (31) ein Öffnungsventil (32) zur Bildung einer Verbindung zwischen einer Umgebung des Injektionsrohres und dem Drosselventil vorgesehen ist.

10. Drosselventil nach Anspruch 9, bei dem die Drosselleitung (13) mit dem Öffnungsventil (32) verbunden ist.

11. Drosselventil nach Anspruch 9 oder 10, bei dem das Öffnungsventil (32) durch ein Einsetzen des Ventilkörpers (10) in den Ventilsitz (31) betätigbar ist.

12. Drosselventil nach mindestens einem der vorhergehenden Ansprüche, bei dem der Ventilkörper (10) eine Eingriffseinrichtung aufweist, die mindestens einen radialen Verriegelungshebel (14) und/oder eine innere Montagenut (17) umfasst.

13. Drosselventil nach Anspruch 12, bei dem der Ventilkörper (10) eine Werkzeugaufnahme (16) aufweist, in der die innere Montagenut (17) und der mindestens eine radiale Verriegelungshebel (14) vorgesehen sind, wobei in die Werkzeugaufnahme (16) ein Montagewerkzeug (80) einsetzbar ist, mit dem im eingesetzten Zustand der mindestens eine radiale Verriegelungshebel (14) betätigbar ist.

14. Drosselventil nach Anspruch 13, das mit dem Montagewerkzeug (80) verbunden ist.

15. Drosselventil nach Anspruch 14, bei dem das Montagewerkzeug (80) Haltezungen (82) aufweist, die in die innere Montagenut (17) eingreifen.

16. Fluidinjektionseinrichtung (200), insbesondere zur Injektion eines Fluids in eine geologische Formation, die umfasst:
- ein Injektionsrohr (30), in dem ein Drosselventil (100) nach mindestens einem der vorhergehenden Ansprüche angeordnet ist,
- einen Druckraum (51) zur Bildung eines Arbeitsdruckes in der Umgebung des Drosselventils (100), und
- eine Druckquelle (60) zur Beaufschlagung des Druckraumes (51) mit dem Arbeitsdruck.

17. Fluidinjektionseinrichtung nach Anspruch 16, die ein Außenrohr (50) aufweist, in dem das Injektionsrohr (30) angeordnet ist, wobei der Druckraum (51) zwischen dem Außenrohr (50) und dem Injektionsrohr (30) gebildet ist.

18. Fluidinjektionseinrichtung nach Anspruch 16 oder 17, die mit einer Drucksensoreinrichtung (40) ausgestattet ist.

19. Fluidinjektionseinrichtung nach Anspruch 18, die einen Regelkreis aufweist, mit dem das Drosselventil (100) in Abhängigkeit von Sensorsignalen der Drucksensoreinrichtung (40) betätigbar ist.

20. Fluidinjektionseinrichtung nach mindestens einem der Ansprüche 16 bis 19, bei der das Injektionsrohr (30) einen Ventilsitz (31) mit Anlaufschrägen (32) zur Aufnahme des Drosselventils (100) aufweist.

21. Fluidinjektionseinrichtung nach mindestens einem der Ansprüche 16 bis 20, bei der als Druckfluid das im Druckraum (51) anstehende Wasser verwendet wird.

22. Verfahren zur Injektion eines Fluids in eine geologische Formation, mit den Schritten:
- Einsetzen eines Drosselventils (100) nach mindestens einem der Ansprüche 1 bis 15 in ein Injektionsrohr (30), das in die geologische Formation ragt,
- Einstellung des Drosselventils (100) durch einen Arbeitsdruck in der Umgebung des Injektionsrohres (30), und
- Injektion des Fluids in die geologische Formation durch das Injektionsrohr (30) und das Drosselventil (100).

23. Verfahren nach Anspruch 22, bei dem der Arbeitsdruck in einem Ringraum (51) zwischen dem Injektionsrohr (30) und einem Außenrohr (50) erzeugt wird.

24. Verfahren nach Anspruch 23, bei dem der Arbeitsdruck über das Öffnungsventil (31) und die Drosselleitung (13) auf das Drosselventil (100) ausgeübt wird.

25. Verfahren nach Anspruch 24, bei dem das Öffnungsventil (31) mit dem Einsetzen des Drosselventils (100) in das Injektionsrohr (30) geöffnet wird.

26. Verfahren nach mindestens einem der Ansprüche 22 bis 25, bei dem der Arbeitsdruck in Abhängigkeit von einem Betriebsdruck stromabwärts vom Drosselventil (100) eingestellt wird.

27. Verfahren nach mindestens einem der Ansprüche 22 bis 26, bei dem das Einsetzen des Drosselventils (100) eine lösbare Befestigung in einem Ventilsitz (31) des Injektionsrohres (30) umfasst.

28. Verfahren nach Anspruch 27, bei dem das Einsetzen des Drosselventils (100) ein Einschieben eines Montagewerkzeugs (80) in das Injektionsrohr (30) umfasst, bis radiale Verriegelungshebel (14) des Ventilkörpers (10) des Drosselventils (100) in eine Sperrnut (30.2) im Inneren des Injektionsrohres (30) eingreifen.

29. Verfahren nach Anspruch 28, bei dem das Abziehen des Drosselventils (100) ein Einschieben eines Ziehwerkzeugs (90) in das Injektionsrohr (30) umfasst, bis ein Werkzeugkörper (91) des Ziehwerkzeugs (90) die radialen Verriegelungshebel (14) von der Sperrnut (30.2) löst.

30. Verfahren nach mindestens einem der Ansprüche 22 bis 29, bei dem das injizierte Fluid flüssiges Kohlendioxid umfasst.

31. Verwendung eines Drosselventils (100) nach mindestens einem der Ansprüche 1 bis 15 oder einer Fluidinjektionseinrichtung (200) nach mindestens einem der Ansprüche 16 bis 21 zur Injektion von flüssigem Kohlendioxid in eine geologische Formation.

## Claims

1. A throttle valve (100), in particular for injecting a fluid into a geological formation, comprising:
- a valve body (10) having a piston chamber(11),
- an annular piston (20) having an axial fluid channel (21), which extends from a high-pressure side (H) to a low-pressure side (L) of the throttle valve, with the annular piston (20) being displaceable within the piston chamber (11) and the fluid channel (21) being transmissive or closed depending on the position of the annular piston (20) in the piston chamber (11),
- a cover plate (12) which is provided on the high-pressure side of the valve body (10) and through which the fluid channel (21) protrudes from the piston chamber (11) to the high-pressure side (H),
**characterized in that**
- the fluid channel (21) is closed in axial direction with a sealing disk (22), which can be rested tightly on the cover plate (12) on the high-pressure side (H), and
- the fluid channel (21) has a radial throttle opening (23) adjacent to the sealing disk (22).

2. The throttle valve according to claim 1, in which the throttle opening (23) has a throttle contour which widens in axial direction toward the low-pressure side (L).

3. The throttle valve according to claim 1 or 2, in which the annular piston (20) has a piston body (24), through which the piston chamber (11) is divided into a high-pressure side annular space (11.1) and a low-pressure side annular space (11.2), wherein the low-pressure side annular space (11.2) is arranged to have a working pressure in an ambiance of the valve body (10) applied thereto.

4. The throttle valve according to claim 3, in which the fluid channel (21) is connected with the high-pressure side annular space (11.1) via a radial connection opening (25).

5. The throttle valve according to claim 3 or 4, in which the low-pressure side annular space (11.2) is connected with the ambiance of the valve body (10) via a throttle line (13).

6. The throttle valve according to at least one of the preceding claims, in which the surface of the valve body (10) has a radially symmetric outer contour.

7. The throttle valve according to at least one of the preceding claims, in which radially acting sealing elements (15) are provided on a surface of the valve body (10).

8. The throttle valve according to at least one of the preceding claims, which has a valve seat (31) which is part of an injection tube (30).

9. The throttle valve according to claim 8, in which an opening valve (32) is provided in the valve seat (31) to form a connection between an ambiance of the injection tube and the throttle valve.

10. The throttle valve according to claim 9, in which the throttle line (13) is connected with the opening valve (32).

11. The throttle valve according to claim 9 or 10, in which the opening valve (32) can be actuated by inserting the valve body (10) in the valve seat (31).

12. The throttle valve according to at least one of the preceding claims, in which the valve body (10) has an engagement device, which comprises at least one radial locking lever (14) and/or an internal mounting groove (17).

13. The throttle valve according to claim 12, in which the valve body (10) has a tool mount (16) in which the internal mounting groove (17) and the at least one radial locking lever (14) are provided, wherein a mounting tool (80) is insertable in the tool mount (16), with which the at least one radial locking lever (14) can be actuated in the inserted state.

14. The throttle valve according to claim 13, which is connected with the mounting tool (80).

15. The throttle valve according to claim 14, in which the mounting tool (80) comprises retaining tongues (82) which engage in the internal mounting groove (17).

16. A fluid injection device (200), in particular for injecting a fluid into a geological formation, comprising:
- an injection tube (30), in which a throttle valve (100) is disposed according to at least one of the preceding claims,
- a pressure chamber (51) for the generation of a working pressure in the ambiance of the throttle valve (100), and
- a pressure source (60) for applying the working pressure to the pressure chamber (51).

17. The fluid injection device according to claim 16, which comprises an outer tube (50) in which the injection tube (30) is disposed, wherein the pressure chamber (51) is formed between the outer tube (50) and the injection tube (30).

18. The fluid injection device according to claim 16 or 17, which is equipped with a pressure sensor device (40).

19. The fluid injection device according to claim 18, comprising a control circuit with which the throttle valve (100) can be actuated depending on sensor signals of the pressure sensor device (40).

20. The fluid injection device according to at least one of claims 16 to 19, in which the injection tube (30) comprises a valve seat (31) having inclined leading surfaces (32) for accomodating the throttle valve (100).

21. The fluid injection device according to at least one of claims 16 to 20, in which the water available in the pressure chamber (51) is used as pressure fluid.

22. A method for injecting a fluid into a geological formation, comprising the steps of:
- inserting a throttle valve (100) according to at least one of claims 1 to 15 in an injection tube (30) protruding into the geological formation,
- adjusting the throttle valve (100) via a working pressure in the ambiance of the injection tube (30), and
- injecting the fluid into the geological formation via the injection tube (30) and the throttle valve (100).

23. The method according to claim 22, in which the working pressure is generated in an annular space (51) between the injection tube (30) and an outer tube (50).

24. The method according to claim 23, in which the working pressure is exerted on the throttle valve (100) via the opening valve (31) and the throttle line (13).

25. The method according to claim 24, in which the opening valve (31) is opened with the insertion of the throttle valve (100) into the injection tube (30).

26. The method according to at least one of claims 22 to 25, in which the working pressure is adjusted depending on an operating pressure downstream of the throttle valve (100).

27. The method according to at least one of claims 22 to 26, in which the insertion of the throttle valve (100) comprises a releasable fastening in a valve seat (31) of the injection tube (30).

28. The method according to claim 27, in which the insertion of the throttle valve (100) comprises introducing a mounting tool (80) into the injection tube (30) until radial locking levers (14) of the valve body (10) of the throttle valve (100) engage in a locking groove (30.2) in the interior of the injection tube (30).

29. The method according to claim 28, in which the drawing off of the throttle valve (100) comprises introducing a drawing tool (90) into the injection tube (30) until a tool body (91) of the drawing tool (90) releases the radial locking levers (14) from the locking groove (30.2).

30. The method according to at least one of claims 22 to 29, in which the injected fluid comprises liquid carbon dioxide.

31. The use of a throttle valve (100) according to at least one of claims 1 to 15 or of a fluid injection device (200) according to at least one of claims 16 to 21 for injecting liquid carbon dioxide into a geological formation.

## Revendications

1. Valve d'étranglement (100), en particulier pour l'injection d'un fluide dans une formation géologique, laquelle comporte :
- un corps de valve (10) avec une chambre de piston (11),
- un piston annulaire (20) avec un conduit de fluide (21) axial, qui s'étend depuis un côté haute pression (H) vers un côté basse pression (L) de la valve d'étranglement, le piston annulaire (20) étant mobile dans la chambre de piston (11) et le conduit de fluide (21) étant ouvert ou fermé en fonction de la position du piston annulaire (20) dans la chambre de piston (11),
- une plaque de recouvrement (12), qui est prévue sur le côté haute pression (H) du corps de valve (10) et à travers laquelle passe le conduit de fluide (21) depuis la chambre de piston (11) vers le côté haute pression (H),
**caractérisée en ce que**
- le conduit de fluide (21) est fermé dans la direction axiale par un disque d'étanchéité (22), qui peut être posé de manière étanche sur la plaque de recouvrement (12) du côté haute pression (H), et
- le conduit de fluide (21) comporte, du côté adjacent au disque d'étanchéité (22), une ouverture d'étranglement (23) radiale.

2. Valve d'étranglement selon la revendication 1, dans laquelle l'ouverture d'étranglement (23) possède un contour d'étranglement qui s'élargit dans la direction axiale vers le côté basse pression (L).

3. Valve d'étranglement selon la revendication 1 ou 2, dans laquelle le piston annulaire (20) comporte un corps de piston (24), par lequel la chambre de piston (11) est divisée en une chambre annulaire du côté haute pression (11.1) et une chambre annulaire du côté basse pression (11.2), et ladite chambre annulaire du côté basse pression (11.2) est conçue pour être sollicitée par une pression de travail dans le voisinage du corps de valve (10).

4. Valve d'étranglement selon la revendication 3, dans laquelle le conduit de fluide (21) communique par une ouverture de liaison (25) radiale avec la chambre annulaire du côté haute pression (11.1).

5. Valve d'étranglement selon la revendication 3 ou 4, dans laquelle la chambre annulaire du côté basse pression (11.2) communique via une conduite d'étranglement (13) avec l'environnement du corps de valve (10).

6. Valve d'étranglement selon au moins l'une quelconque des revendications précédentes, dans laquelle la surface du corps de valve (10) possède un contour extérieur à symétrie radiale.

7. Valve d'étranglement selon au moins l'une quelconque des revendications précédentes, dans laquelle il est prévu des éléments d'étanchéité (15) agissant radialement sur une surface du corps de valve (10).

8. Valve d'étranglement selon au moins l'une quelconque des revendications précédentes, laquelle comporte un siège de valve (31), qui est une partie d'un tube d'injection (30).

9. Valve d'étranglement selon la revendication 8, dans laquelle, dans le siège de valve (31), il est prévu une vanne d'ouverture (32) pour établir une liaison entre un voisinage du tube d'injection et la valve d'étranglement.

10. Valve d'étranglement selon la revendication 9, dans laquelle la conduite d'étranglement (13) est reliée à la vanne d'ouverture (32).

11. Valve d'étranglement selon la revendication 9 ou 10, dans laquelle la vanne d'ouverture (32) peut être actionnée par l'introduction du corps de valve (10) dans le siège de valve (31).

12. Valve d'étranglement selon au moins l'une quelconque des revendications précédentes, dans laquelle le corps de valve (10) comporte un dispositif d'actionnement qui comporte au moins un levier de verrouillage (14) radial et/ou une rainure de montage (17) intérieure.

13. Valve d'étranglement selon la revendication 12, dans laquelle le corps de valve (10) comporte un logement d'outil (16), dans lequel sont prévus la rainure de montage (17) intérieure et ledit au moins un levier de verrouillage (14) radial, sachant qu'il est possible d'insérer dans le logement d'outil (16) un outil de montage (80) qui, dans la position introduite, permet d'actionner ledit au moins un levier de verrouillage (14) radial.

14. Valve d'étranglement selon la revendication 13, laquelle est reliée à l'outil de montage (80).

15. Valve d'étranglement selon la revendication 14, dans laquelle l'outil de montage (80) comporte des pattes de fixation (82) qui s'engagent dans la rainure de montage (17) intérieure.

16. Dispositif d'injection de fluide (200), destiné en particulier à l'injection d'un fluide dans une formation géologique, lequel comporte :
- un tube d'injection (30), dans lequel est disposée une valve d'étranglement (100) selon au moins l'une des revendications précédentes,
- une chambre de pression (51) pour former une pression de travail dans le voisinage de la valve d'étranglement (100), et
- une source de pression (60) pour solliciter la chambre de pression (51) avec la pression de travail.

17. Dispositif d'injection de fluide selon la revendication 16, lequel comporte un tube extérieur (50) dans lequel est disposé le tube d'injection (30), la chambre de pression (51) étant formée entre le tube extérieur (50) et le tube d'injection (30).

18. Dispositif d'injection de fluide selon la revendication 16 ou 17, lequel est équipé d'un dispositif de détection de la pression (40).

19. Dispositif d'injection de fluide selon la revendication 18, lequel comporte un circuit de réglage, par lequel la valve d'étranglement (100) peut être actionnée en fonction des signaux du dispositif de détection de la pression (40).

20. Dispositif d'injection de fluide selon au moins l'une quelconque des revendications 16 à 19, dans lequel le tube d'injection (30) comporte un siège de valve (31) avec des chanfreins (32) destinés à recevoir la valve d'étranglement (100).

21. Dispositif d'injection de fluide selon au moins l'une quelconque des revendications 16 à 20, dans lequel l'eau contenue dans la chambre de pression (51) est utilisée comme fluide de pression.

22. Procédé pour l'injection d'un fluide dans une formation géologique, comportant les étampes :
- introduction d'une valve d'étranglement (100) selon au moins l'une des revendications 1 à 15 dans un tube d'injection (30), qui s'engage dans la formation géologique,
- réglage de la valve d'étranglement (100) par une pression de travail dans le voisinage du tube d'injection (30), et
- injection du fluide dans la formation géologique au moyen du tube d'injection (30) et de la valve d'étranglement (100).

23. Procédé selon la revendication 22, dans lequel la pression de travail est générée dans une chambre annulaire (51) entre le tube d'injection (30) et un tube extérieur (50).

24. Procédé selon la revendication 23, dans lequel la pression de travail est exercée sur la valve d'étranglement (100) via la vanne d'ouverture (31) et la conduite d'étranglement (13).

25. Procédé selon la revendication 24, dans lequel la vanne d'ouverture (31) s'ouvre sous l'effet de l'introduction de la valve d'étranglement (100) dans le tube d'injection (30).

26. Procédé selon au moins l'une quelconque des revendications 22 à 25, dans lequel la pression de travail est réglée en fonction de la pression de service en aval de la valve d'étranglement (100).

27. Procédé selon au moins l'une quelconque des revendications 22 à 26, dans lequel l'introduction de la valve d'étranglement (100) englobe une fixation amovible dans un siège de valve (31) du tube d'injection (30).

28. Procédé selon la revendication 27, dans lequel l'introduction de la valve d'étranglement (100) englobe l'introduction d'un outil de montage (80) dans le tube d'injection (30), jusqu'à ce que des leviers de verrouillage (14) radiaux du corps (10) de la valve d'étranglement (100) s'engagent dans une rainure de blocage (30.2) à l'intérieur du tube d'injection (30).

29. Procédé selon la revendication 28, dans lequel le retrait de la valve d'étranglement (100) englobe une introduction d'un outil de traction (90) dans le tube d'injection (30) jusqu'à ce qu'un corps (91) de l'outil de traction (90) retire les leviers de verrouillage (14) radiaux hors de la rainure de blocage (30.2).

30. Procédé selon au moins l'une quelconque des revendications 22 à 29, dans lequel le fluide injecté comporte un dioxyde de carbone liquide.

31. Utilisation d'une valve d'étranglement (100) selon au moins l'une quelconque des revendications 1 à 15 ou d'un dispositif d'injection de fluide (200) selon au moins l'une quelconque des revendications 16 à 21 pour l'injection du dioxyde de carbone liquide dans une formation géologique.
